# EUROPÄISCHE PATENTSCHRIFT

(11) **EP 0 753 806 B1**
(45) Veröffentlichungstag und Bekanntmachung des Hinweises auf die Patenterteilung: **29.12.1999**
(21) Anmeldenummer: 96110550.9
(22) Anmeldetag: 29.06.1996
(51) Int. Cl.: G05D 23/19, G05D 7/00, F25B 9/14, F28F 27/00, F24D 7/00, F24F 11/02

(54) **Vorrichtung zur Temperaturregelung einer Heizeinrichtung**
Temperature controller for a heater
Arrangement pour régulation de température d'un dispositif de chauffage

(30) Priorität: 12.07.1995 DE 19525327
(43) Veröffentlichungstag der Anmeldung: 15.01.1997
(73) Patentinhaber: WILO GmbH, D-44263 Dortmund (DE)
(72) Erfinder: Radzey, Jürgen, 58239 Schwerte (DE); Strelow, Günter, 44801 Bochum (DE)
(74) Vertreter: COHAUSZ HANNIG DAWIDOWICZ & PARTNER

(56) Entgegenhaltungen:
- DE-A- 4 108 910
- PATENT ABSTRACTS OF JAPAN vol. 012, no. 475 (M-774), 13.Dezember 1988 & JP 63 197896 A (TOSHIBA CORP), 16.August 1988,
- PATENT ABSTRACTS OF JAPAN vol. 005, no. 172 (M-095), 31.Oktober 1981 & JP 56 097736 A (MATSUSHITA ELECTRIC IND CO LTD), 6.August 1981,
- PATENT ABSTRACTS OF JAPAN vol. 014, no. 478 (M-1036), 18.Oktober 1990 & JP 02 192539 A (SHIMIZU CORP;OTHERS: 01), 30.Juli 1990,

## Beschreibung

Die Vorrichtung betrifft eine Vorrichtung zum Regeln der Temperatur einer Heizeinrichtung mit einem eine Pumpe aufweisenden Primärkreislauf, der durch eine Wärmequelle insbesondere einen Heizkessel und einen Wärmeaustauscher verläuft und mit einem Sekundärkreislauf, der zum Wärmeverbraucher führt und durch den Wärmeaustauscher läuft, um Wärme vom Primärkreislauf zu übernehmen, wobei ein Thermofühler vorgesehen ist, durch den entsprechend dem Wärmeverbrauch der Primärkreislauf steuerbar ist.

Es ist aus der DE 41 08 910 bekannt, eine Fußbodenheizung über einen Wärmeaustauscher mit einem Heizkessel zu verbinden. Hierbei ist im Primärkreislauf ein 3-Wege-Mischventil angeordnet, das über einen Stellmotor bewegbar ist, der über einen Regler von einem Thermofühler gesteuert wird, der am Vorlauf des Sekundärkreislaufs anliegt. Eine solche Anlage erfordert zahlreiche zusätzliche Bauelemente, wie Mischventile, Stellmotor und Beipass.

Überdies ist es aus der japanischen Druckschrift JP 63197896 bekannt, mittels eines Temperaturfühlers die Drehzahl einer in einem Kühlkreislauf angeordneten Pumpe zu regeln, um so eine Temperaturabhängigkeit der Kühlmittel - Strömungsgeschwindigkeit bzw. des Volumenstromes zu erreichen.

Aufgabe der Erfindung ist es, eine Vorrichtung der eingangs genannten Art so zu verbessern, daß bei einfacher Konstruktion und geringem Montageaufwand nur wenige Bauteile erforderlich sind.

Diese Aufgabe wird erfindungsgemäß dadurch gelöst, daß die Pumpe des Primärkreislaufs entsprechend den Werten des Thermofühlers in ihrer Drehzahl steuerbar ist.

Hierbei ist der Thermofühler an oder in der Pumpe des Primärkreislaufs oder des Sekundärkreislaufs angeordnet.

Bei einer solchen Lösung übernimmt die Pumpe des Primärkreislaufs die Steuerung des Volumenstromes und damit die Wärmemenge des Primärkreislaufs und mittelbar auch die des Sekundärkreislaufs. Die Pumpe ist in ihrer elektrischen Regeleinrichtung derart ausgerüstet, daß sie kontinuierlich ihren Volumenstrom ändert und somit die Temperatur im Primärkreislauf ständig an die vom Regler eingestellten und durch den Anlegefühler aufgenommenen Temperatursollwert angleicht. Eine derartige Regelung ermöglicht somit den Entfall einer teuren Misch- bzw. Stellmotoreinrichtung.

Weiterhin entfällt bei der Anordnung des Thermofühlers in der Pumpe ein Außenfühler einschließlich der Anschlußleitungen und einer äußeren Regeleinrichtung. Die Anlage wird damit besonders klein und unanfällig. Ferner kann der Thermofühler die Außentemperatur erfassen.

Weitere vorteilhafte Ausgestaltungen sind in den Ansprüchen 2 bis 6 aufgeführt.

Ein Ausführungsbeispiel der Erfindung ist in den zeichnungen dargestellt und wird im folgenden näher beschrieben. Es zeigen:
- Figur 1:: Eine Ansicht der Vorrichtung mit außen angeordnetem Thermofühler und
- Figur 2:: eine Ansicht der Vorrichtung mit Thermofühler innerhalb der Pumpe.

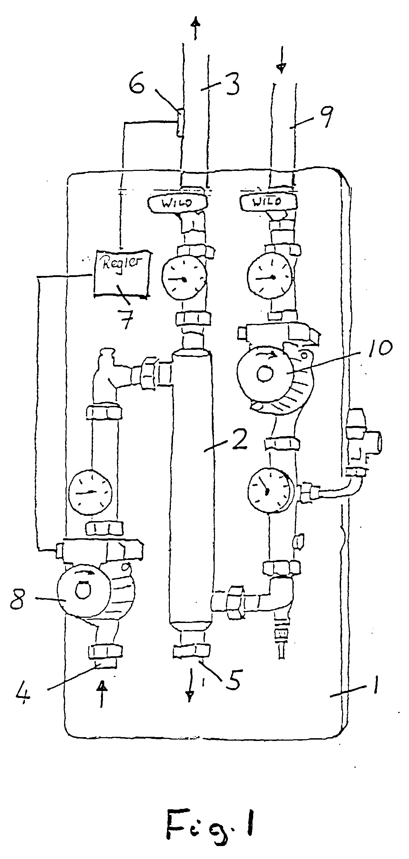

Figur 1 zeigt die Vorrichtung bei abgenommener vorderer Gehäuseschale. Auf der Gehäuserückwand 1 ist ein senkrechtstehender zylindrischer Wäremaustauscher 2 montiert, dessen oberes Ende koaxial angeschlossen ist an der Zuleitung 3 zum Verbraucher, insbesondere zur Fußbodenheizung und seitlich am Vorlauf der Wärmequelle 4 insbesondere des Heizkessels. Die untere Seite ist koaxial angeschlossen am Rücklauf 5 der Wärmequelle und seitlich am Rücklauf 9 des Verbrauchers.

Im Vorlauf 4 ist eine Pumpe 8 eingesetzt, die das Wasser im Primärkreislauf fördert. Im Rücklauf 9 befindet sich eine zweite Pumpe 10, um das Medium insbesondere das Wasser im Sekundärkreislauf des Verbrauchers zu fördern.

An der Außenseite der Vorlaufleitung 3 des Sekundärkreislaufs ist ein Thermofühler (Temperaturfühler) 6 befestigt, der die Temperatur des Vorlaufmediums insbesondere des Wasser mißt und einem Regler 7 eingibt, der mit der Pumpe 8 verbunden ist und den Drehzahl-Sollwert der Pumpe 8 verstellt. Hierdurch wird der Volumenstrom der Pumpe 8 entsprechend dem Wärmebedarf des Verbrauchers verändert, ohne ein Mischventil zu benötigen.

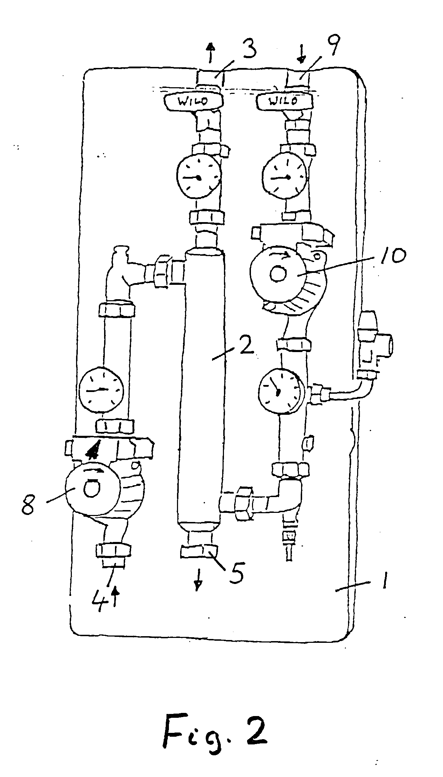

Das Ausführungsbeispiel nach Figur 2 unterscheidet sich von dem nach Figur 1 dadurch, daß der Thermofühler 6 in oder an der Pumpe befestigt ist. Auch hierdurch läßt sich der Wärmebedarf des Verbrauchers erfassen, da die Temperatur des Primärkreislaufs von der Temperatur des Sekundärkreislaufs mitbestimmt wird. Damit sind Thermofühler 6, Regler 7 und Pumpe 8 eine bauliche Einheit.

In einer weiteren Alternative können der Thermofühler 6 und der Regler 7 in oder an der Pumpe 10 angeordnet sein, um die Drehzahl der Pumpe 8 und/oder der Pumpe 10 zu regeln.

Nicht dargestellt ist, daß im Primärkreislauf vorzugsweise eine bekannte Regeleinrichtung angeordnet ist, die entsprechend der Temperatur des Primärkreislaufs die Wärmequelle steuert.

Da die innerhalb des Gehäuses befindlichen Anschlußleitungen und Teilleitungen des Primär- und Sekundärkreislaufs zueinander und zum Wäremaustauscher 2 parallel und insbesondere senkrecht liegen, können alle diese Teile sehr nahe aneinander gerückt sein, so daß sie sehr wenig Platz innerhalb des Gehäuses benötigen. Damit können die Außenabmessungen des Gehäuses sehr klein sein. Auch ist es von großem Vorteil, daß die Anschlüsse zum Verbraucher an einer Seite des Gehäuses insbesondere an der Oberseite und die Anschlüsse zum Heizkessel an der anderen insbesondere gegenüberliegenden und damit insbesondere an der Unterseite des Gehäuses angeordnet sind.

Der Thermofühler kann nich nur im Primärkreislauf und/oder im Sekundärkreislauf angeordnet sein, sondern ev. kann auch ein Außentemperaturfühler sein.

## Patentansprüche

1. Vorrichtung zum Regeln der Temperatur einer Heizeinrichtung mit einem eine Pumpe (8) aufweisenden Primärkreislauf, der durch eine Wärmequelle insbesondere einen Heizkessel und einen Wärmeaustauscher (2) verläuft und mit einem Sekundärkreislauf, der zum Wärmeverbraucher führt und durch den Wärmeaustauscher (2) läuft, um Wärme vom Primärkreislauf zu übernehmen, wobei ein Thermofühler (6) vorgesehen ist, durch den entsprechend dem Wärmeverbrauch der Primärkreislauf steuerbar ist, **dadurch gekennzeichnet,** daß die Pumpe (8) des Primärkreislaufs entsprechend den Werten des Thermofühlers (6) in ihrer Drehzahl steuerbar ist, wobei der Thermofühler an oder in der Pumpe des Sekundärkreislaufs oder des Primärkreislaufs angeordnet ist.

2. Vorrichtung nach Anspruch 1, **dadurch gekennzeichnet,** daß der Thermofühler (6) die Außentemperatur erfaßt.

3. Vorrichtung nach einem der vorherigen Ansprüche, **dadurch gekennzeichnet,** daß der Wärmeverbraucher eine Fußbodenheizung, eine Wandheizung und/oder eine Deckenheizung ist.

4. Vorrichtung nach einem der Ansprüche 1 bis 2, **dadurch gekennzeichnet,** daß der Wärmeverbraucher eine Schwimmbadbeheizung ist.

5. Vorrichtung nach einem der vorherigen Ansprüche, **dadurch gekennzeichnet,** daß der Wärmeaustauscher (2) und beide Pumpen (8, 10) in einem einzigen Gehäuse angeordnet sind, das auch die Anschlüsse für beide Kreisläufe aufweist.

6. Vorrichtung nach Anspruch 5, **dadurch gekennzeichnet,** daß im Gehäuse alle erforderlichen Armaturen, Ventile und/oder Anzeigeinstrumente angeordnet sind.

## Claims

1. A device for controlling the temperature of a heating system, having a primary circuit having a pump (8) which extends through a heat source, more particularly a boiler and a heat exchanger (2), and a secondary circuit which extends to the heat load and runs through the heat exchanger (2) to take over heat from the primary circuit, a thermal sensor (6) being provided via which the primary circuit can be controlled in accordance with heat consumption, **characterised in that** the speed of the pump (8) of the primary circuit can be controlled in accordance with the values of the thermal sensor (6), the thermal sensor being disposed on or in the pump of the secondary circuit or the primary circuit.

2. A device according to claim 1, **characterised in that** the thermal sensor (6) detects the outside temperature.

3. A device according to one of the preceding claims, **characterised in that** the heat load is a floor, wall and/or ceiling heating system.

4. A device according to one of claims 1 to 2, **characterised in that** the heat load is a swimming bath heating system.

5. A device according to one of the preceding claims, **characterised in that** the heat exchanger (2) and the two pumps (8, 10) are disposed in a single casing which also has the connections for the two circuits.

6. A device according to claim 5, **characterised in that** all the necessary fittings, valves and/or display instruments are disposed in the casing.

## Revendications

1. Dispositif de régulation de la température d'une installation de chauffage avec un cycle primaire présentant une pompe (8), qui s'écoule à travers une source de chaleur, en particulier une chaudière de chauffage, et un échangeur de chaleur (2), et avec un cycle secondaire qui conduit au consommateur de chaleur et s'écoule à travers l'échangeur de chaleur (2) pour recevoir la chaleur du cycle primaire, une thermo-sonde (6) étant prévue, par laquelle le cycle primaire peut être commandé en correspondance de la consommation de chaleur,
caractérisé en ce que la pompe (8) du cycle primaire peut être commandée en vitesse de rotation en correspondance des valeurs de la thermo-sonde (6), la thermo-sonde étant disposée sur ou dans la pompe du cycle secondaire ou du cycle primaire.

2. Dispositif selon la revendication 1,
caractérisé en ce que la thermo-sonde (6) détecte la température extérieure.

3. Dispositif selon l'une des revendications précédentes,
caractérisé en ce que le consommateur de chaleur est une installation de chauffage par le sol, une installation de chauffage mural et/ou une installation de chauffage par le plafond.

4. Dispositif selon l'une des revendications 1 et 2,
caractérisé en ce que le consommateur de chaleur est une installation de chauffage de piscine.

5. Dispositif selon l'une des revendications précédentes,
caractérisé en ce que l'échangeur de chaleur (2) et les deux pompes (8, 10) sont disposés dans un carter unique qui présente également les branchements pour les deux cycles.

6. Dispositif selon la revendication 5,
caractérisé en ce que l'ensemble des garnitures, valves et/ou instruments indicateurs sont disposés dans le carter.
